# EUROPEAN PATENT SPECIFICATION

(11) **EP 2 873 313 B1**
(45) Date of publication and mention of the grant of the patent: **22.03.2017**
(21) Application number: 14168592.5
(22) Date of filing: 16.05.2014
(51) Int. Cl.: A01B 59/041

(54) **Implement life arm lateral stabilization device**
Seitliche Stabilisierungsvorrichtung für den Auslegerhubarm eines Arbeitsgerätes
Dispositif de stabilisation latérale de bras de durée de mise en oeuvre d'un dispositif

(30) Priority: 23.09.2013 GB 201316821
(43) Date of publication of application: 20.05.2015
(73) Proprietor: AGCO International GmbH, 8212 Neuhausen am Rheinfall (CH)
(72) Inventor: Stich, Ulrich, 87662 Blonhofen (DE)
(74) Representative: AGCO Intellectual Property Department

(56) References cited:
- EP-A1- 0 904 680
- EP-A1- 1 721 501
- WO-A1-2005/097526
- GB-A- 2 172 082
- US-A- 6 089 328
- US-B1- 6 386 571

## Description

The present invention relates to devices for controllably holding or releasing a movable linkage and particularly, but not exclusively, to such devices used with the lower lift arms of a three-point linkage on the front or rear of an agricultural vehicle such as a tractor.

Such a lateral stabilization device, used for the locking of each of the two lower linkage arms (also known as lift arms) of an equipment mounting linkage of an agricultural tractor, is described in the commonly-owned European patent EP-B-1 745 685. The lift arms are each provided with a support strut which is connected by means of a pivot bolt to a pivoting pivot arm mounted on a bracket secured to the tractor. The pivot arm interacts with a stop disc which is adjustable manually between a locked position, in which a one stop element has the effect of lateral stabilization of an implement connected between the linkage arms against movement away from a central position, and an unlocked position, in which a second stop suspends the lateral stabilization of the implement.

An alternative to such an arrangement of fixed length support struts is described in United States patent US 6 089 328 and provides a hydraulically extendible connecting rod in place of each of the support struts. For attaching an implement to the lower links, respective hydraulic circuits apply a common pressure level to force each of the hydraulic rods is in its fully extended position, although a pressure differential may be applied if it is needed to adjust the central position of an attached implement. During working operation, the pressure in each of the hydraulic rods is released such that the linkage arms can swing laterally (floating) with the implement. During road travel the implement is stabilised by pressurising both hydraulic rods. This can be controlled by a button in the cab of the tractor.

A problem with such an arrangement is that twin hydraulic circuits are required on the tractor driving twin cylinders on the linkage (as the links are ideally movable independently) which has a penalty in terms of cost and complexity.

It is an object of the present invention to at least partially mitigate such problems.

In accordance with a first aspect of the present invention there is provided a device for the lateral stabilization of an implement link of an agricultural vehicle, comprising first and second components movably mounted relative to one another in a telescoping arrangement having a minimum and maximum length of extension, and a fluid chamber which, when pressurised, urges the first and second components to relative positions giving a locked centralised position at a length of extension for the device greater than the minimum and less than the maximum length of extension. With such a device providing a locking centred position for an implement linkage when pressurised, whilst allowing the linkage to float to positions either side of centred when not pressurised, only a single such device is required to stabilise an implement, in contrast to the twin hydraulic rods of the prior art.

The present invention also provides an agricultural vehicle including at least one implement link supported on a frame thereof, and a lateral stabilisation device as recited in the preceding paragraph, said device being connected at one end to the vehicle frame and at the other being connected to the implement link.

Suitably a remote operation means may be provided for the lateral stabilisation device, for example in the cab of the vehicle, such that the operator does not need to leave the cab to effect the locking and unlocking of the linkage arms.

Further features of the present invention are recited in the attached subclaims to which reference should now be made.

Embodiments of the present invention will now be described, by way of example only and with reference to the accompanying drawings in which:
Figure 1 is a plan view of a tractor rear axle and implement mounting linkage with a known arrangement for lateral stabilisation of the linkage;
Figure 2 is a similar view to Figure 1, but using a device embodying the present invention for the lateral stabilisation of the linkage;
Figure 3 is a sectional view through a first embodiment of lateral stabilisation device according to the present invention and in a pressurised and centred configuration;
Figure 4 shows the device of Figure 3 in a depressurised and compressed configuration;
Figure 5 shows the device of Figure 3 in a depressurised and extended configuration; and
Figure 6 is a sectional view through a further embodiment of lateral stabilisation device according to the present invention.

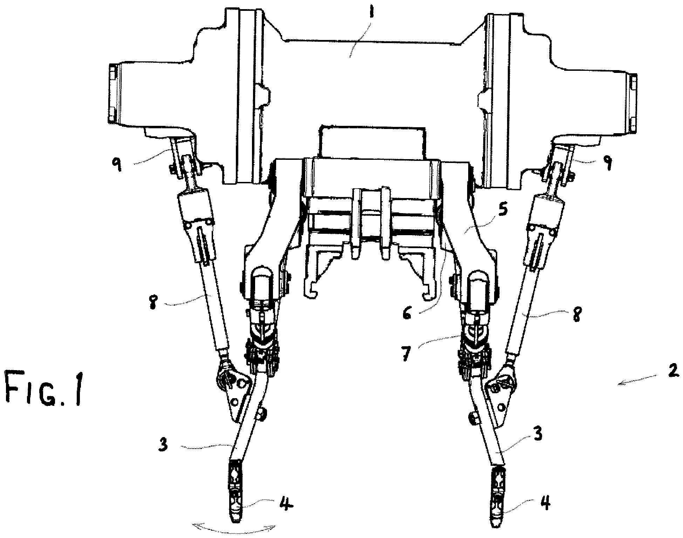

In Figure 1 part of the rear area of a known agricultural tractor is shown, of a similar type to the above-mentioned US 6 089 328, with the rear axle 1 and the implement mounting linkage indicated generally at 2. The implement mounting linkage 2 has two lower links in the form of lift arms 3 which are mounted on the middle part of the axle, which extend rearwards in respect of the normal direction of travel, and which at their free ends have hook elements 4 for the connection of an implement.

Rotatably mounted in the upper region of the middle part of the axle are raising arms 5 which are connected to respective powered raising devices in the form of hydraulic cylinders 6 which are supplied with pressurised fluid by the hydraulic system of the vehicle. The raising arms 5 are connected via raising struts 7 to the lift arms 3. Also typically rotatably mounted to the upper region of the middle part of the axle is a top link (not shown) to provide the well-known three-point linkage for agricultural implements. Thus with the aid of hydraulic cylinders 6, an implement connected to the three-point linkage 2 can be adjusted between a fully lowered position and a fully raised position in the normal manner.

In the embodiment of the implement mounting linkage 2 described hitherto, the lift arms 3 can pivot laterally at any height position about mounts on the middle part of the axle. An implement which is being carried by the lift arms 3 will therefore be able to move to and fro during work operation on the field under the effect of forces transverse to the direction of travel of the vehicle. This is desirable if, for example, a plough is involved. If other types of equipment are used, such as sprayers, for example, which are not intended to carry out any lateral movements in relation to the vehicle during work operation, they must therefore be connected to the vehicle in a laterally stable manner. Further, during transport operation on the road the lateral movement of the lift arms 3 must be prevented if an implement is connected thereto. In order to fulfil this requirement, each of the lift arms 3 is laterally stabilised by a respective hydraulic cylinder 8 extending from the lift arm to an anchoring point 9 on the rear axle housing. Each of the cylinders 8 requires a respective controlled supply of pressurised fluid.

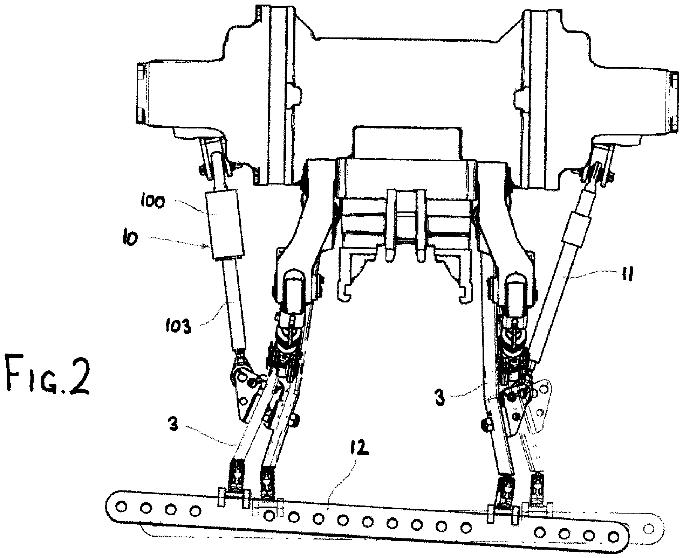

Figure 2 shows a stabilising arrangement embodying the present invention. In contrast to the twin hydraulic cylinder 8 arrangement of Figure 1, only a single fluid-operated stabilisation device 10 is utilised in place of one of the hydraulic cylinders: the other cylinder 8 is replaced by a telescoping rod arrangement 11. As will be described in greater detail below, when fluid pressure is applied to the stabilisation device 10, it locks in a centralised position and prevents lateral movement of the connected lift arm 3. If an implement is mounted to the hitch, or (as shown) a linkage bar 12 is connected between the two lift arms, the centring action of the stabilisation device 10 will lock both links.

When the source of fluid pressure is not applied to the stabilisation device 10, the device can expand and contract in a telescoping manner to an overall length greater than and less than the length when locked, allowing both lift arms 3 to float laterally. The telescoping rod arrangement 11 does not play a role in centring of the lift arms, but instead simply prevents the coupled lift arm from swinging to a position where it impacts the adjacent tractor wheel (the rear right-hand wheel in the orientation of Figure 2).

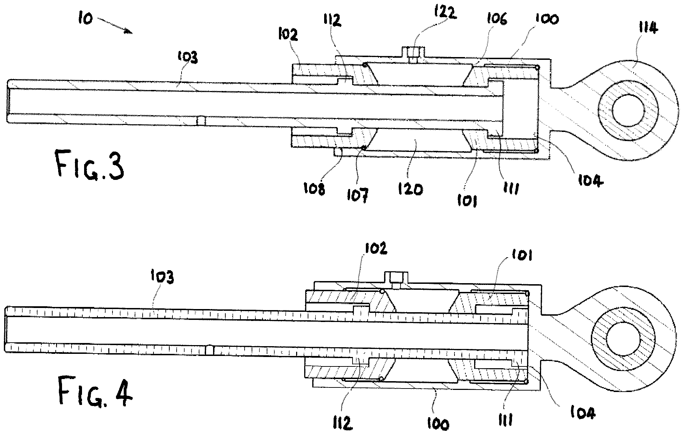

Figures 3 to 5 are sectional views through a first embodiment of the stabilisation device 10 and show that the device essentially comprises a cylinder 100 housing first 101 and second 102 pistons, with each of the hollow and generally cylindrical pistons 101, 102 sliding on a connection rod 103, and the cylinder 100, pistons 101, 102 and connection rod 103 sharing a common axis. In the following description of the operation of the stabilisation device 10, the directions "left" and "right" follow the orientation shown in the figures, and are not otherwise limiting.

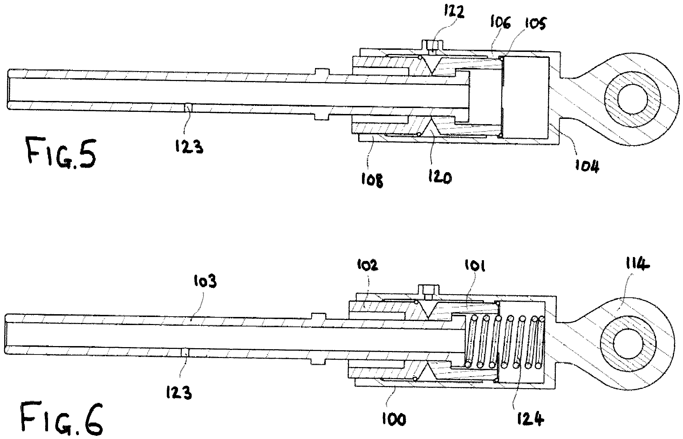

The right-hand end 104 of the cylinder 100 is closed, with the closure 104 providing a limitation means fixing the extent of travel of the first piston 101 towards the right, as in the example of Figure 3. A radially extending lip 105 provided by a snap-ring at the right hand end of the first piston also impinges on a first reduced-diameter section 106 of the cylinder bore providing a limitation means fixing the extent of travel of the first piston 101 towards the left, as in the example of Figure 5.

The left-hand end of the cylinder 100 is open, and a radially extending lip (not shown) having a greater diameter than the cylinder bore may be provided on the second piston 102 as a limitation means fixing the extent of travel of the second piston 102 towards the right, generally at a position as in the examples of Figures 4 and 5. A radially extending lip 107 provided by a snap-ring at the right hand end of the second piston 102 also impinges on a second reduced-diameter section 108 of the cylinder bore providing a limitation means fixing the extent of travel of the second piston 102 towards the left, as in the example of Figure 3.

Each of the pistons 101, 102 is a generally hollow cylindrical body having a stepped diameter bore along the axis, with a first portion of the bore being of smaller diameter such as to be a sliding fit on the connection rod 103. The second portion of the bore is of larger diameter and receives a radially extending collar portion 111, 112 on the surface of the connection rod 103. Within the cylinder 100, the smaller diameter bore portions of the two pistons 101, 102 are set to face each other and come into contact when the pistons are at their closest. First and second 111, 112 radially extending collar portions on the surface of the connection rod 103 are disposed outwardly of the smaller bore portions and thereby provide respectively limiting portions fixing the outward (away from each other) movement of the first and second pistons 101, 102.

At the closed end 104 of the cylinder, a mounting lug 114 is suitably provided for attachment of the stabilization device 10 to the rear axle housing, as at 9 in Figure 1. A similar mounting lug or connector (not shown) is suitably provided at the free end of the connection rod 103.

In operation, an annular fluid chamber 120 is defined within the stabilization device, with the fluid chamber being bounded in the radial direction between the connection rod 103 and cylinder 100 bore and in the axial direction by the first 101 and second 102 pistons. The wall of the cylinder includes an opening 122 through which pressurised fluid may be added to or vented from the annular chamber 120. The surfaces of the first and second pistons forming part of the interior surface of the fluid chamber are suitably angled back from a plane perpendicular to the cylinder axis such that there is still an annular space present even when the first 101 and second 102 pistons are in contact, as in the position shown in Figure 5.

When pressurised fluid is introduced to the fluid chamber 120, the first and second pistons 101, 102 are forced apart until each impacts the respective collar portion 111, 112 of the connection rod. At this point, the first piston 101 impacts the closed end limitation 104 and the second piston lip 107 impacts the reduced diameter portion 108 of the bore, locking the position of the two pistons and connection rod 103 relative to the cylinder for as long as pressure of fluid is maintained. This alignment of components is as shown in Figure 3.

When the pressurised fluid is allowed to vent from the chamber 120, the connection rod 103 can move in a telescoping manner relative to the cylinder 100. The most compressed form of the device is as shown in Figure 4, where the connection rod 103 moves to the right (into the cylinder) until it impacts the closed end portion 104. This alignment allows the left-hand lift arm 3 of Figure 2 to swing furthest to the left (away from the centre line of the vehicle). The most extended form of the device is shown in Figure 5, with the first piston 101 at its left limit with lip 105 against reduced diameter portion 106, and radially extending collar portion 111 being stopped by the reduced diameter bore of the first piston 101.

To avoid vacuum locking effects as the connecting rod 103 and/or the first piston 101 move to the left, an air passage is provided to couple the cylinder bore between the first piston 101 and closed end 104 to the atmosphere. As shown in Figures 3 to 5, the connecting rod 103 is suitably made hollow such that the air passage can extend axially along its length. If the far end of the connecting rod is closed (for example by a further mounting lug or connector) a lateral venting aperture 123 may be provided at a point along the connecting rod outside of the cylinder bore. Alternative arrangements including a solid connecting rod 103 and a venting aperture in closure 104 are also possible.

From reading the present disclosure, it will be understood that additions or modifications are possible. For example, it may be advantageous when attaching an implement (without the driver leaving the cab) if the linkage is biased to a particular lateral position. This may be achieved by adding a compression spring 124 between the end of the connection rod 103 and the closed end 104 of the cylinder, as shown in Figure 6. Although shown in the present examples as connected between the left-hand lift arm 3 and the rear axle housing, it will be readily understood that the stabilization device may equally well be directly connected to the right-hand lift arm: the important consideration is that the pressurised fluid supply for stabilizing the lift arms need only be provided on one of the left and right sides.

## Claims

1. A device (10) for the lateral stabilization of an implement link of an agricultural vehicle, comprising first and second components (103, 100) movably mounted relative to one another in a telescoping arrangement having a minimum and maximum length of extension, and a fluid chamber (120); **characterised in that** the fluid chamber, when pressurised, urges the first and second components (103, 100) to relative positions giving a locked centralised position at a length of extension for the device (10) greater than the minimum and less than the maximum length of extension.

2. A device as claimed in claim 1, wherein the first component (103) is a connection rod and the second component (100) is a cylinder, further comprising first (101) and second (102) pistons each in the form of a hollow generally cylindrical body slidably mounted on the connection rod (103) within a bore of the cylinder (100), with the fluid chamber (120) being bounded in the radial direction between the connection rod and cylinder bore and in the axial direction by the first and second pistons.

3. A device as claimed in claim 2, wherein the cylinder (100) bore includes first and second limiting means (104, 107) preventing axial movement of respective ones of the first and second pistons (101, 102) away from the other of the first and second pistons.

4. A device as claimed in claim 3, wherein one of the first and second limiting means (104) is a closed end of the cylinder bore.

5. A device as claimed in claim 4, further comprising an air passage (123) coupling the cylinder bore between one of the pistons (100) and the closed end (104) to the atmosphere.

6. A device as claimed in claim 5, wherein the air passage extends axially along the connection rod (103).

7. A device as claimed in claim 3, wherein one of the first and second limiting means (107) is a portion of the inner surface of the cylinder bore having a smaller diameter than an outside diameter of one of the first and second pistons (102).

8. A device as claimed in claim 2 or claim 3, wherein the connection rod (103) includes first and second limiting portions (111, 112) preventing axial movement of respective ones of the first and second pistons (101, 102) away from the other of the first and second pistons.

9. A device as claimed in claim 8, wherein at least one of the first and second limiting portions (111, 112) is a raised collar on the connection rod (103) having a larger diameter than a bore through one of the first and second pistons (101, 102).

10. A device as claimed in any of claims 1 to 9, further comprising a spring (124) between the first and second components (100, 103) to bias the device to maximum extension when the fluid chamber (120) is not pressurised.

11. An agricultural vehicle including at least one implement link (3) supported on a frame thereof, and a device (10) as claimed in any of claims 1 to 10, said device being connected at one end to the vehicle frame and at the other being connected to the implement link.

12. An agricultural vehicle as claimed in claim 11, said vehicle having a three-point linkage with one of the lower links (3) having a respective device (10) as claimed in any of claims 1 to 10 coupled thereto, and the other of the lower links having mechanical means (11) limiting an extent of pivoting of said other link.

13. An agricultural vehicle as claimed in claim 11 or claim 12, further comprising control means operable from a driver cab of the vehicle to cause the pressurisation and depressurisation of the device fluid chamber (120).

## Patentansprüche

1. Vorrichtung (10) für die seitliche Stabilisierung einer Anbaugerätkupplung eines landwirtschaftlichen Fahrzeugs, mit ersten und zweiten Bauteilen (103, 100), die relativ zueinander beweglich in einer teleskopierbaren Anordnung montiert sind, die eine minimale und eine maximale Erstreckungslänge aufweist, und mit einer Fluidkammer (120); **dadurch gekennzeichnet, dass** die Fluidkammer, wenn sie druckbeaufschlagt ist, die ersten und zweiten Bauteile (103, 100) in Relativpositionen drängt, die in einer gesperrten Zentralposition mit einer Erstreckungslänge der Vorrichtung (10) von mehr als der minimalen und weniger als der maximalen Erstreckungslänge resultieren.

2. Vorrichtung nach Anspruch 1, wobei das erste Bauteil (103) eine Verbindungsstange und das zweite Bauteil (100) ein Zylinder ist, weiterhin mit ersten (101) und zweiten (102) Kolben, die jeweils die Form eines hohlen, grundsätzlich zylindrischen Körpers aufweisen, der verschieblich auf der Verbindungsstange (103) in einer Bohrung des Zylinders (100) angeordnet ist, wobei die Fluidkammer (120) in radialer Richtung zwischen der Verbindungsstange und der Zylinderbohrung und in axialer Richtung durch die ersten und zweiten Kolben begrenzt ist.

3. Vorrichtung nach Anspruch 2, wobei die Bohrung des Zylinders (100) erste und zweite Begrenzungsmittel (104, 107) aufweist, die eine axiale Bewegung von jeweils einem der ersten und zweiten Kolben (101, 102) weg von dem anderen der ersten und zweiten Kolben verhindern.

4. Vorrichtung nach Anspruch 3, wobei eines der ersten und zweiten Begrenzungsmittel (104) ein geschlossenes Ende der Zylinderbohrung ist.

5. Vorrichtung nach Anspruch 4, weiterhin mit einen Luftdurchlass (123), der die Zylinderbohrung zwischen einem der Kolben (100) und dem geschlossenen Ende (104) mit der Atmosphäre verbindet.

6. Vorrichtung nach Anspruch 5, wobei sich der Luftdurchlass axial entlang der Verbindungsstange (103) erstreckt.

7. Vorrichtung nach Anspruch 3, wobei eines der ersten und zweiten Begrenzungsmittel (107) ein Teil der inneren Oberfläche der Zylinderbohrung ist, der einen kleineren Durchmesser als der Außendurchmesser des ersten oder zweiten Kolbens (102) besitzt.

8. Vorrichtung nach Anspruch 2 oder Anspruch 3, wobei die Verbindungsstange (103) erste und zweite Begrenzungsbereiche (111, 112) aufweist, die eine axiale Bewegung von jeweils einem der ersten und zweiten Kolben (101, 102) weg von dem anderen der ersten und zweiten Kolben verhindern.

9. Vorrichtung nach Anspruch 8, wobei mindestens einer der ersten und zweiten Begrenzungsbereiche (111, 112) ein erhöhter Kragen auf der Verbindungsstange (103) ist, der einen größeren Durchmesser als eine Bohrung durch einen der ersten und zweiten Kolben (101, 102) besitzt.

10. Vorrichtung nach einem der Ansprüche 1 bis 9, weiterhin mit einer Feder (124) zwischen den ersten und zweiten Bauteilen (100, 103), um die Vorrichtung zur maximalen Erstreckung zu beaufschlagen, wenn die Fluidkammer (120) nicht druckbeaufschlagt ist.

11. Landwirtschaftliches Fahrzeug mit mindestens einer an einem Rahmen des landwirtschaftlichen Fahrzeugs abgestützten Anbaugerätkupplung (3) und einer Vorrichtung (10) nach einem der Ansprüche 1 bis 10, wobei die Vorrichtung an einem Ende mit dem Fahrzeugrahmen und an dem anderen mit der Anbaugerätkupplung verbunden ist.

12. Landwirtschaftliches Fahrzeug nach Anspruch 11, wobei das Fahrzeug eine Dreipunktaufhängung aufweist, wobei einer der Unterlenker (3) mit einer Vorrichtung (10) nach einem der Ansprüche 1 bis 10 verbunden ist und der andere der Unterlenker ein mechanisches Mittel (11) aufweist, das ein Ausmaß eines Verschwenkens des anderen Unterlenkers beschränkt.

13. Landwirtschaftliches Fahrzeug nach Anspruch 11 oder Anspruch 12, das ein von einer Fahrerkabine des Fahrzeugs bedienbares Steuer- oder Regelmittel aufweist, um die Druckbeaufschlagung und das Aufheben der Druckbeaufschlagung der Fluidkammer (120) der Vorrichtung auszulösen.

## Revendications

1. Dispositif (10) destiné à assurer la stabilisation latérale d'une liaison d'outillage d'un véhicule agricole, comprenant des premier et second composants (103, 100) montés de manière à pouvoir se déplacer l'un par rapport à l'autre suivant un agencement télescopique présentant une longueur d'extension minimum et une longueur maximum, et une chambre de fluide (120) ; **caractérisé en ce que** la chambre de fluide, lorsqu'elle est pressurisée, pousse les premier et second composants (103, 100) vers des positions relatives donnant une position centralisée verrouillée à une longueur d'extension pour le dispositif (10) supérieure à la longueur d'extension minimum et inférieure à la longueur maximum.

2. Dispositif selon la revendication 1, dans lequel le premier composant (103) est une tige de liaison et le second composant (100) est un cylindre, comprenant, en outre, des premier (101) et second (102) pistons chacun étant sous la forme d'un corps cylindrique sensiblement creux monté de manière à pouvoir coulisser sur la tige de liaison (103) à l'intérieur d'un alésage du cylindre (100), la chambre de fluide (120) étant bordée, dans la direction radiale, entre la tige de liaison et la tige de vérin et, dans la direction axiale, par les premier et second pistons.

3. Dispositif selon la revendication 2, dans lequel l'alésage du cylindre (100) comporte des premier et second moyens de limitation (104, 107) empêchant le mouvement axial d'un premier respectif des premier et second pistons (101, 102) à l'opposé de l'autre des premier et second pistons.

4. Dispositif selon la revendication 3, dans lequel l'un des premier et second moyens de limitation (104) est une extrémité fermée de l'alésage de cylindre.

5. Dispositif selon la revendication 4, comprenant en outre un passage d'air (123) couplant l'alésage de cylindre entre l'un des pistons (100) et l'extrémité fermée (104) à l'atmosphère.

6. Dispositif selon la revendication 5, dans lequel le passage d'air s'étend axialement le long de la tige de liaison (103).

7. Dispositif selon la revendication 3, dans lequel l'un des premier et second moyens de limitation (107) est une partie de la surface interne de l'alésage de cylindre présentant un diamètre inférieur à un diamètre externe de l'un des premier et second pistons (102).

8. Dispositif selon la revendication 2 ou 3, dans lequel la tige de liaison (103) comporte des première et seconde parties de limitation (111, 112) empêchant le déplacement axial d'un premier respectif des premier et second pistons (101, 102) à l'opposé de l'autre des premier et second pistons.

9. Dispositif selon la revendication 8, dans lequel au moins l'une des première et seconde parties de limitation (111, 112) est une bague surélevée sur la tige de liaison (103) présentant un diamètre supérieur à un alésage à travers l'un des premier et second pistons (101, 102).

10. Dispositif selon l'une quelconque des revendications 1 à 9, comprenant en outre un ressort (124) entre les premier et second composants (100, 103) afin d'appliquer le dispositif vers une extension maximum lorsque la chambre de fluide (120) n'est pas pressurisée.

11. Véhicule agricole comportant au moins une liaison d'outillage (3) supportée sur un châssis de celui-ci, et un dispositif (10) selon l'une quelconque des revendications 1 à 10, ledit dispositif étant relié, au niveau d'une première extrémité, au châssis de véhicule et étant relié, au niveau de l'autre, à la liaison d'outillage.

12. Véhicule agricole selon la revendication 11, ledit véhicule comportant un élément de liaison en trois points, l'une des liaisons inférieures (3) comportant un dispositif respectif (10) selon l'une quelconque des revendications 1 à 10 couplé à ce dernier, et l'autre des liaisons inférieures comportant un moyen mécanique (11) limitant l'étendue du pivotement de ladite autre liaison.

13. Véhicule agricole selon la revendication 11 ou 12, comprenant en outre un moyen de commande pouvant être activé à partir de la cabine de conducteur du véhicule de manière à provoquer la pressurisation et la dépressurisation de la chambre de fluide de dispositif (120).
